# EUROPÄISCHE PATENTSCHRIFT

(11) **EP 2 992 202 B1**
(45) Veröffentlichungstag und Bekanntmachung des Hinweises auf die Patenterteilung: **14.06.2017**
(21) Anmeldenummer: 14724028.7
(22) Anmeldetag: 30.04.2014
(51) Int. Cl.: B01D 46/12, B01D 46/00, B01D 46/24, B01D 46/52, F02M 35/02, F02M 35/024

(54) **FILTERELEMENT**
FILTER ELEMENT
ELEMENT FILTRANT

(30) Priorität: 03.05.2013 DE 102013208162
(43) Veröffentlichungstag der Anmeldung: 09.03.2016
(73) Patentinhaber: Mahle International GmbH, 70376 Stuttgart (DE); Bayerische Motoren Werke Aktiengesellschaft, 80809 München (DE)
(72) Erfinder: GENSLER, Harry, 71229 Leonberg (DE); KAISER, Stefan, 71686 Remseck (DE); KOHLER, Samuel, 71093 Weil im Schönbuch (DE); WAIBEL, Hans, 71686 Remseck Aldingen (DE); DEPIEREUX, Dirk, 85521 Ottobrunn (DE)
(74) Vertreter: BRP Renaud & Partner mbB Rechtsanwälte Patentanwälte Steuerberater
(86) Internationale Anmeldenummer: PCT/EP2014/058785
(87) Internationale Veröffentlichungsnummer: WO 2014/177598

(56) Entgegenhaltungen:
- DE-A1-102011 083 657
- DE-U1-202008 010 474
- US-A1- 2012 159 910

## Beschreibung

Die vorliegende Erfindung betrifft ein Filterelement, vorzugsweise ein Luftfilterelement für eine Frischluftanlage einer Brennkraftmaschine.

Filterelemente gibt es in vielfältigen Formen und Konfigurationen. Luftfilterelemente von Frischluftanlagen sind bei Fahrzeuganwendungen häufig den dort anzufindenden Einbausituationen unterworfen. Regelmäßig herrscht in einem Motorraum eines Fahrzeugs Bauraumknappheit, so dass vorhandene Bauräume möglichst effizient ausgenutzt werden müssen, um hinreichend große Filterelemente bzw. eine hinreichende Filterleistung bei tolerierbarem Durchströmungswiderstand erreichen zu können. Üblicherweise sind Filterelemente symmetrisch aufgebaut, wodurch sie sich für asymmetrische Bauraumsituationen wenig eignen. Das Dokument DE 10 2011 083 657 A1 zeigt ein Filterelement, das asymmetrisch aufgebaut ist. Die vorliegende Erfindung beschäftigt sich mit dem Problem, für ein derartiges Filterelement eine verbesserte oder zumindest eine andere Ausführungsform anzugeben, die sich dadurch auszeichnet, dass sie sich in besonderer Weise für asymmetrische Bauräume eignet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Filterelement als Hohlkörper auszugestalten, bei dem sich in einer Umfangsrichtung zwei durchströmbare Plattenfilterkörper und zwei nicht durchströmbare Wandkörper abwechseln, derart, dass sich die beiden Plattenfilterkörper diametral gegenüberliegen und dass sich die beiden Wandkörper ebenfalls diametral gegenüberliegen. Die Längsenden der Plattenfilterkörper und der Wandkörper sind dann mit Endkörpern versehen, welche die axialen Stirnseiten des Filterelements bilden. Durch die Verwendung von zwei separaten Plattenfilterkörpern lassen sich diese geometrisch unterschiedlich gestalten, wodurch die Geometrie des Filterelements auf einfache Weise variiert werden kann, beispielsweise um eine asymmetrische Bauform für das Filterelement zu erzielen. Die Verwendung von zwei separaten Wandkörpern ist dabei von entscheidender Bedeutung, da mit diesen separaten Wandkörpern geometrische Unterschiede zwischen den beiden Plattenfilterkörpern ausgeglichen werden können. Auch die beiden Endkörper sind wichtig für das als Hohlkörper konfigurierte Filterelement, da mit Hilfe der Endkörper eine stabile Lagefixierung der beiden Wandkörper relativ zueinander ermöglicht wird, wodurch die Wandkörper mit den Endkörpern einen hinreichend stabilen Tragrahmen für die beiden Plattenfilterkörper bilden können. Das hier vorgestellte Filterelement kann somit aus vergleichsweise wenig Einzelteilen zusammengebaut werden, wobei die Möglichkeit gegeben ist, durch Variieren der Plattenfilterkörper, der Wandkörper und der Endkörper unterschiedliche asymmetrische Geometrien für das Filterelement zu realisieren. Dementsprechend kann das Filterelement bei unterschiedlichen und insbesondere bei kritischen Einbausituationen zur Anwendung kommen.

Im Einzelnen umfasst das hier vorgestellte Filterelement einen ersten Plattenfilterkörper aus einem plissierten Filtermaterial und einen dem ersten Plattenfilterkörper gegenüberliegenden separaten zweiten Plattenfilterkörper aus einem plissierten Filtermaterial. Ferner umfasst das Filterelement einen ersten Wandkörper aus Kunststoff, der mit einem ersten Querende des ersten Plattenfilterkörpers und einem ersten Querende des zweiten Plattenfilterkörpers fest und dicht verbunden ist, sowie einen dem ersten Wandkörper gegenüberliegenden zweiten Wandkörper aus Kunststoff, der mit einem zweiten Querende des ersten Plattenfilterkörpers und mit einem zweiten Querende des zweiten Plattenfilterkörpers fest und dicht verbunden ist. Schließlich sind ein erster Endkörper aus Kunststoff, der mit einem ersten Längsende des ersten Plattenfilterkörpers und einem ersten Längsende des zweiten Plattenfilterkörpers fest und dicht verbunden ist, sowie ein dem ersten Endkörper gegenüberliegender zweiter Endkörper aus Kunststoff vorgesehen, der mit einem zweiten Längsende des ersten Plattenfilterkörpers und mit einem zweiten Längsende des zweiten Plattenfilterkörpers fest verbunden ist. Um ein funktionsfähiges Filterelement zu erhalten, muss zumindest eine Gasdurchlassöffnung vorhanden sein, die als Einlassöffnung oder als Auslassöffnung dient. Zweckmäßig ist eine derartige Gasdurchlassöffnung zumindest an einem der Endkörper ausgebildet.

Entsprechend einer vorteilhaften Ausführungsform kann das erste Querende des ersten Plattenfilterkörpers in einer ersten Ebene liegen, die von einer zweiten Ebene beabstandet ist, in der das erste Querende des zweiten Plattenfilterkörpers liegt. Hierdurch lässt sich besonders einfach eine asymmetrische Geometrie für das Filterelement realisieren. Erfindungsgemäß ist vorgesehen, die beiden Plattenfilterkörper in ihrer Querrichtung unterschiedlich groß zu dimensionieren. Insbesondere lässt sich dadurch im Querschnitt des Filterelements eine Keilform realisieren, was bei bestimmten Einbausituationen vorteilhaft sein kann.

Bei einer anderen Ausführungsform kann vorgesehen sein, dass die beiden Plattenfilterkörper in ihrer Längsrichtung gleich groß sind. Insbesondere können die ersten Längsenden und die zweiten Längsenden der beiden Plattenfilterkörper jeweils in einer Ebene liegen, die sich quer zur Längsrichtung der Plattenfilterkörper bzw. des Filterelements erstreckt. Dementsprechend erstrecken sich auch die Endkörper im Wesentlichen parallel zueinander. Insgesamt kann das Filterelement dadurch in einer parallel zur Querrichtung der Plattenfilterkörper orientierten Projektion einen Rechteckquerschnitt besitzen. Hierdurch vereinfacht sich der Aufbau des Filterelements. Gleichzeitig vereinfacht sich dadurch auch der Aufbau eines zugehörigen Filtergehäuses, in welches das Filterelement eingesetzt werden kann. Erfindungsgemäß weist zumindest einer der beiden Wandkörper zwischen den beiden Plattenfilterkörpern im Profil quer zur Längsrichtung der Plattenfilterkörper eine Wölbung auf. Durch diese Maßnahme lässt sich das Filterelement besonders einfach an eine vorgegebene Einbausituation adaptieren, um den vorhandenen Bauraum möglichst effizient ausnutzen zu können. Die Wölbung ist nach innen orientiert, so dass sich der Innenraum des Filterelements im Vergleich zu einer Ausführungsform mit ungewölbtem bzw. ungestuftem Wandkörper verkleinert.

Gemäß einer vorteilhaften Weiterbildung kann die Wölbung in einem mittleren Bereich des jeweiligen Wandkörpers, der zu beiden Endkörpern distal angeordnet ist, stärker ausgeprägt sein als in Endbereichen des jeweiligen Wandkörpers, die beiderseits des mittleren Bereichs proximal zu je einem Endkörper angeordnet sind. Insbesondere können dabei die Endbereiche ungewölbt bzw. ungestuft sein. Durch diese Maßnahme kann eine Adaption des Filterelements an unterschiedliche Einbausituationen realisiert werden, ohne dass dabei die übrige Konfiguration bezüglich der Endkörper und der Plattenfilterkörper verändert werden muss.

Bei einer anderen vorteilhaften Weiterbildung kann die Wölbung so ausgeprägt sein, dass der mittlere Bereich in eine parallel zur Längsrichtung orientierte Projektion der Gasdurchlassöffnung hinein ragt.
Bei einer anderen Ausführungsform kann das Filtermaterial der beiden Plattenfilterkörper in der Querrichtung des jeweiligen Plattenfilterkörpers gefaltet sein, so dass sich Endfalten des jeweiligen Plattenfilterkörpers an den Längsenden des jeweiligen Plattenfilterkörpers befinden und dort fest sowie dicht mit dem jeweiligen Endkörper verbunden sind. Üblicherweise wird das plissierte Filtermaterial randseitig geradlinig beschnitten, so dass das erste Querende und das zweite Querende des jeweiligen Plattenfilterkörpers in zueinander parallelen Ebenen liegen. Dies vereinfacht die Anbindung an die Wandkörper. Insbesondere können die Plattenfilterkörper in den Kunststoff der Wandkörper einplastizifiziert werden. Gemäß einer vorteilhaften Ausführungsform kann zumindest einer der Wandkörper an wenigstens einem seiner Längsenden mit dem jeweiligen Endkörper verrastet sein. Bevorzugt sind beide Wandkörper am jeweiligen Längsende mit dem jeweiligen Endkörper verrastet. Besonders vorteilhaft ist eine Ausführungsform, bei der beide Wandkörper an ihren beiden Längsenden jeweils mit dem jeweiligen Endkörper verrastet sind. Durch die Verwendung einer Verrastung vereinfacht sich der Zusammenbau des Filterelements. Insbesondere ist denkbar, dass der jeweilige Endkörper mit den Wandkörpern und/oder mit den Plattenfilterkörpern verklebt wird, wobei die Verrastung eine vorläufige Fixierung ermöglicht, bis der jeweilige Klebstoff ausgehärtet bzw. getrocknet ist. Die endgültige Fixierung erzeugt dann die Klebverbindung.
Bei einer anderen vorteilhaften Ausführungsform können die beiden Wandkörper an ihren Längsenden jeweils zwei Rasthaken aufweisen, die den jeweiligen Endkörper randseitig übergreifen. Hierdurch kann in der Längsrichtung, also in der Axialrichtung des Filterelements, eine formschlüssige Kopplung zwischen den Wandkörpern und den Endkörpern realisiert werden, was die Druckstabilität des Filterelements verbessert. Die Rasthaken vereinfachen jedoch gleichzeitig auch den Zusammenbau des Filterelements, da keine zusätzlichen separaten Befestigungsmittel erforderlich sind. Alternativ ist es ebenso möglich, derartige Rasthaken am jeweiligen Endkörper vorzusehen, die dann an einer entsprechenden Rastkontur einrasten, die am jeweiligen Wandkörper ausgebildet ist.

Der jeweilige Endkörper kann entsprechend einer vorteilhaften Ausführungsform mit den zugewandten Längsenden der beiden Plattenfilterkörper und mit den beiden Wandkörpern fest und dicht verbunden sein. Dies kann mittels einer Schweißverbindung oder mittels einer Klebverbindung besonders einfach realisiert werden. Im Hinblick auf eine Ausführungsform, bei welcher die Endkörper mit den Plattenfilterkörpern und den Wandkörpern verklebt werden, ist die zuvor genannte Ausführungsform mit den Rasthaken besonders vorteilhaft. Beispielsweise können die Endkörper mit bereits darauf angebrachtem Klebstoff an die Wandkörper und die Plattenfilterkörper angebaut werden. Die Rasthaken übernehmen die Fixierung so lange, bis der jeweilige Klebstoff ausgehärtet ist.

Gemäß einer anderen vorteilhaften Ausführungsform kann vorgesehen sein, dass nur der erste Endkörper die eine Gasdurchlassöffnung aufweist, während der zweite Endkörper geschlossen ist. Die Gasdurchlassöffnung bildet dann entweder eine Einlassöffnung oder eine Auslassöffnung, je nach Durchströmungsrichtung des Filterelements. Bei einer alternativen Ausführungsform kann der zweite Endkörper eine Sekundäröffnung aufweisen, die zusätzlich zur Gasdurchlassöffnung (Primäröffnung) vorhanden sein kann, um Sekundärluft für andere Zwecke abzuführen.

Bei einer anderen Weiterbildung kann der zweite Endkörper an einer Seite, bevorzugt an seiner vom ersten Endkörper abgewandten Außenseite, eine erste Befestigungskonsole aufweisen, mit deren Hilfe das Filterelement in einem Filtergehäuse fixierbar ist. Hierdurch vereinfacht sich die Montage des Filterelements im Filtergehäuse.

Bei einer anderen vorteilhaften Weiterbildung kann der zweite Endkörper an einer der ersten Befestigungskonsole gegenüberliegenden Seite, bevorzugt an seiner dem ersten Endkörper zugewandten Innenseite, eine zweite Befestigungskonsole aufweisen. Ferner kann optional vorgesehen sein, dass der zweite Endkörper so ausgestaltet ist, dass er wahlweise mit der ersten Befestigungskonsole nach außen oder mit der zweiten Befestigungskonsole nach außen am jeweiligen Längsende der Wandkörper montierbar ist. Die beiden Befestigungskonsolen sind dabei unterschiedlich ausgestaltet, so dass sie für unterschiedliche Einbausituationen des Filterelements zur Anwendung kommen. Da mithilfe desselben Endkörpers zwei verschiedene Varianten für das Filterelement realisierbar sind, reduzieren sich die Herstellungskosten für diese Variantenbildung. Es ist klar, dass bei einem derartigen, wendbaren zweiten Endkörper die Begriffe "Außenseite", "Innenseite", "erste Befestigungskonsole" und "zweite Befestigungskonsole" relativ zu verstehen sind, nämlich mit Bezug auf die jeweiligen Ein- oder Anbaulage am Filterelement.

Während der eine Wandkörper, vorzugsweise der erste Wandkörper, die besagte Wölbung aufweist, ist der zweite Wandkörper vorzugsweise ungewölbt bzw. ungestuft und somit im Wesentlichen eben konfiguriert.

Die Wandkörper können an ihrer Außenseite und/oder an ihrer Innenseite mit einer Vielzahl von parallel zur Längsrichtung verlaufenden Längsrippen und mit einer Vielzahl von parallel zur Querrichtung verlaufenden Querrippen ausgestattet sein, die sich vielseitig kreuzen, sofern sie auf derselben Seite des jeweiligen Wandkörpers angeordnet sind.

Weitere vorteilhafte geometrische Adaptionen des Filterelements an zur Verfügung stehende Einbauräume lassen sich erreichen, wenn sich die beiden Plattenfilterkörper hinsichtlich ihrer Plattenebenen parallel zueinander erstecken oder wenn sich die beiden Plattenfilterkörper hinsichtlich ihrer Plattenebenen geneigt zueinander erstrecken, wobei insbesondere vorgesehen sein kann, dass zumindest einer der Plattenfilterkörper hinsichtlich seiner Plattenebene geneigt zu einer Längsrichtung des Filterelements und/oder geneigt zu einer Querrichtung des Filterelements angeordnet ist. Zusätzlich oder alternativ kann vorgesehen sein, dass sich zumindest einer der Plattenfilterkörper hinsichtlich seiner Plattenebene parallel zur Längsrichtung des Filterelements und/oder parallel zur Querrichtung des Filterelements erstreckt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1 und 2: jeweils eine isometrische Ansicht eines Filterelements in entgegengesetzten Blickrichtungen,
- Fig. 3: ein Längsschnitt des Filterelements,
- Fig. 4: eine Queransicht des Filterelements,
- Fig. 5: eine Längsansicht des Filterelements,
- Fig. 6 bis 8: jeweils einen Querschnitt des Filterelements, jedoch bei anderen Ausführungsformen.

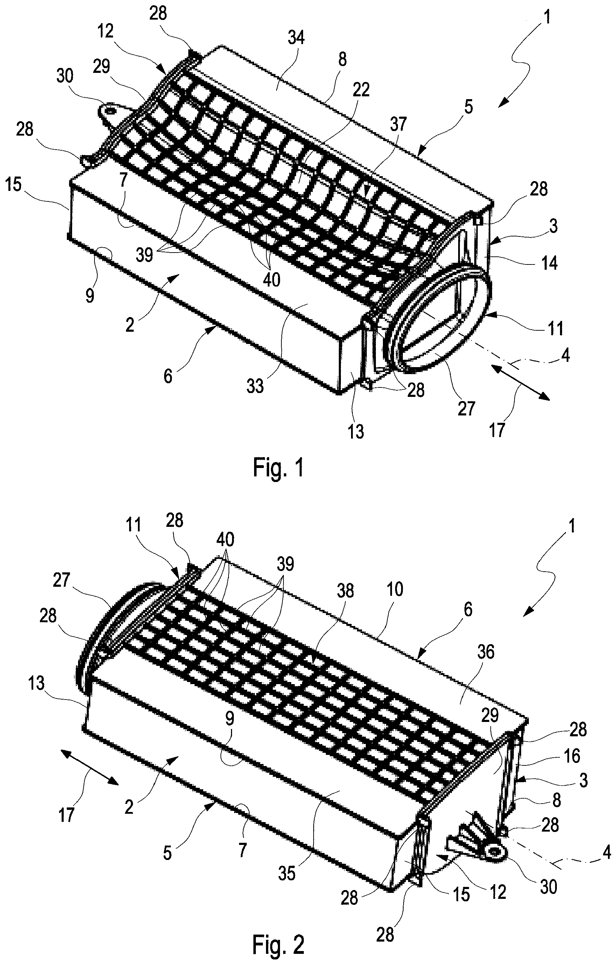

Entsprechend den Figuren 1 bis 5 umfasst ein Filterelement 1, bei dem es sich insbesondere um ein Luftfilterelement und vorzugsweise um ein Fahrzeugluftfilterelement handelt, einen ersten Plattenfilterkörper 2 aus einem plissierten Filtermaterial und einen zweiten Plattenfilterkörper 3, ebenfalls aus einem plissierten Filtermaterial. Zweckmäßig handelt es sich um das gleiche Filtermaterial. Der zweite Plattenfilterkörper 3 verläuft zweckmäßig parallel zum ersten Plattenfilterkörper 2 und repräsentiert ein diesbezüglich separates Bauteil. Die beiden Plattenfilterkörper 2, 3 liegen sich im Filterelement 1 bezüglich einer Längsmittelachse 4 des Filterelements 1 diametral gegenüber. Der jeweilige Plattenfilterkörper 2, 3 ist bevorzugt als ebener Plattenfilterkörper 2, 3 konzipiert, bei dem eine Plattenebene parallel zu den Falten des gefalteten Filtermaterials verläuft und bei dem die einzelnen Falten in der Plattenebene nebeneinander angeordnet sind.

Das Filterelement 1 weist außerdem einen ersten Wandkörper 5 aus einem Kunststoff und einen zweiten Wandkörper 6 ebenfalls aus einem Kunststoff auf. Zweckmäßig sind die beiden Wandkörper 5, 6 aus dem gleichen Kunststoff spritzgeformt. Der erste Wandkörper 5 ist mit einem ersten Querende 7 des ersten Plattenfilterkörpers 2 und mit einem ersten Querende 8 des zweiten Plattenfilterkörpers 3 fest und dicht verbunden. Der zweite Wandkörper 6 bildet bezüglich des ersten Wandkörpers 5 ein separates Bauteil und ist fest und dicht mit einem zweiten Querende 9 des ersten Plattenfilterkörpers 2 und mit einem zweiten Querende 10 des zweiten Plattenfilterkörpers 3 verbunden. Dabei sind die beiden Wandkörper 5, 6 zweckmäßig mit den beiden Plattenfilterkörpern 2, 3 verschweißt oder verklebt oder plastifiziert. Die beiden Wandkörper 5, 6 liegen sich bezüglich der Längsmittelachse 4 diametral gegenüber.

Schließlich umfasst das Filterelement 1 noch einen ersten Endkörper 11 und einen zweiten Endkörper 12, jeweils aus Kunststoff. Der erste Endkörper 11 ist fest und dicht verbunden mit einem ersten Längsende 13 des ersten Plattenfilterkörpers 2 und mit einem ersten Längsende 14 des zweiten Plattenfilterkörpers 3. Der zweite Endkörper 12 ist mit einem zweiten Längsende 15 des ersten Plattenfilterkörpers 2 und mit einem zweiten Längsende 16 des zweiten Plattenfilterkörpers 3 fest und dicht verbunden. Zwischen den beiden Endkörpern 11, 12 und den Plattenfilterkörpern 2, 3 werden dabei Klebverbindungen bevorzugt. Die beiden Endkörper 11, 12 liegen sich in einer Längsrichtung 17 des Filterelements 1 gegenüber, die sich parallel zur Längsmittelachse 4 erstreckt. Die beiden Endkörper 11, 12 sind außerdem dicht und fest mit den nicht näher bezeichneten Längsenden der beiden Wandkörper 5, 6 verbunden. Auch hier werden Klebverbindungen bevorzugt.

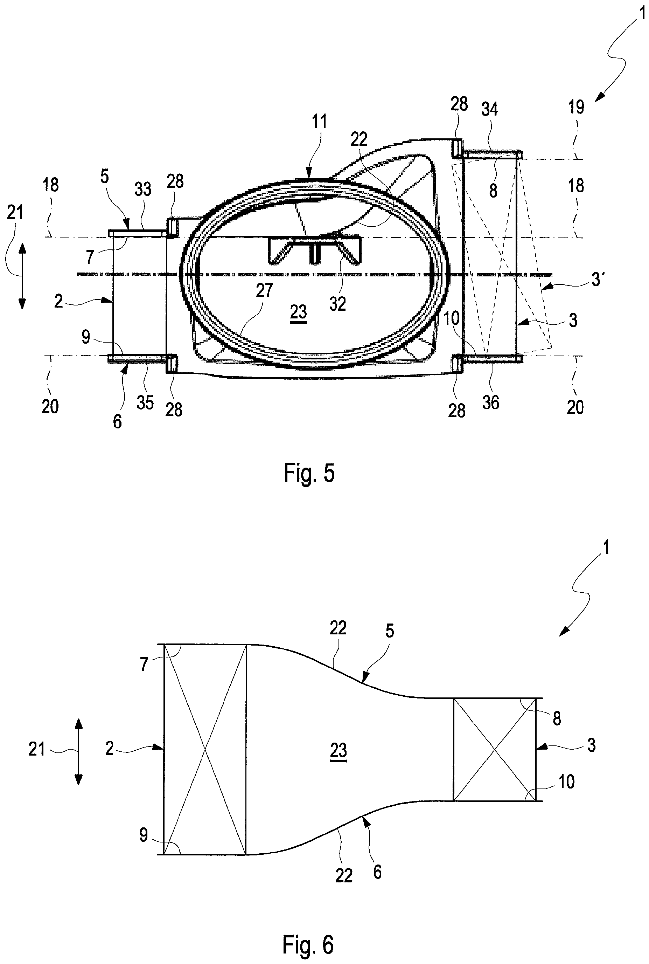

Gemäß Fig. 5 liegt das erste Querende 7 des ersten Plattenfilterkörpers 2 in einer ersten Ebene 18, während das erste Querende 8 des zweiten Plattenfilterkörpers 3 in einer zweiten Ebene 19 liegt, die sich parallel zur ersten Ebene 18 erstreckt und die von der ersten Ebene 18 beabstandet ist. Im Unterschied dazu liegen das zweite Querende 9 des ersten Plattenfilterkörpers 2 und das zweite Querende 10 des zweiten Plattenfilterkörpers 3 in einer gemeinsamen Ebene 20. Die Ebenen 18, 19, 20 erstrecken sich dabei parallel zueinander. Wie sich Fig. 5 ferner entnehmen lässt, sind die beiden Plattenfilterkörper 2, 3 in einer Querrichtung 21 des Filterelements 1 bzw. des jeweiligen Plattenfilterkörpers 2, 3 unterschiedlich groß. Im Beispiel der Fig. 1 bis 5 ist der erste Plattenfilterkörper 2 in der Querrichtung 21 kleiner dimensioniert als der zweite Plattenfilterkörper 3. Im Unterschied dazu sind gemäß den Figuren 1 bis 4 die beiden Plattenfilterkörper 2, 3 in ihrer Längsrichtung 17 gleich groß.

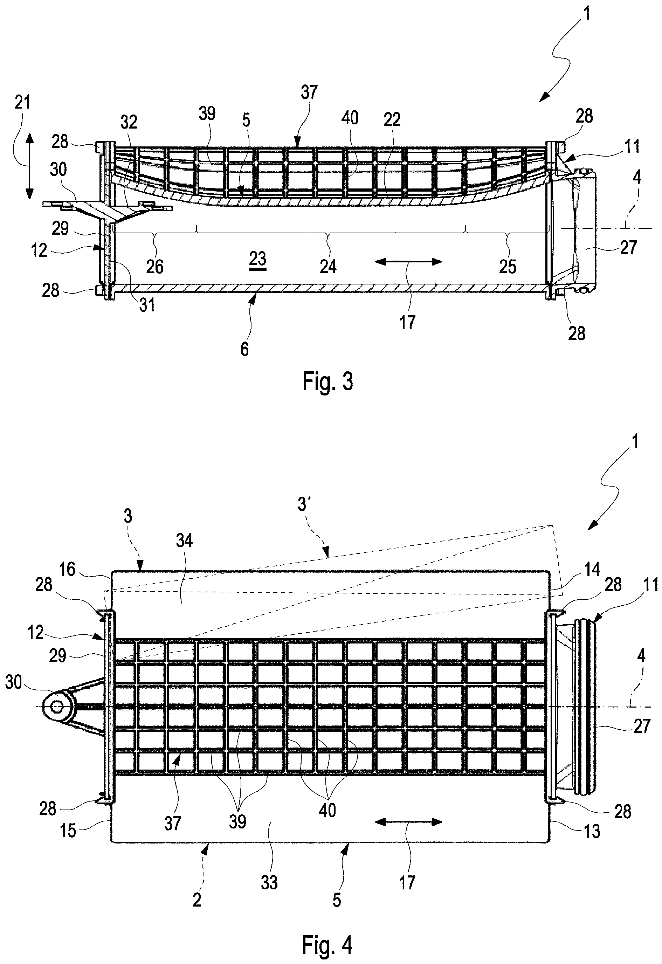

Wie sich insbesondere den Figuren 1, 3 und 5 entnehmen lässt, weist der erste Wandkörper 5 zwischen den beiden Plattenfilterkörpern 2, 3 in einem sich quer zur Längsrichtung 17 erstreckenden Profil eine Wölbung 22 auf. Die Wölbung 22 besitzt eine abgerundete Kontur. Mit Hilfe der Wölbung 22 wird der in Fig. 5 erkennbare Niveauunterschied zwischen den beiden ersten Querenden 7, 8 der beiden Plattenfilterkörper 2, 3, also der Abstand zwischen den vorstehend genannten Ebenen 18, 19 überwunden. Dabei ist die Wölbung 22 bei der hier gezeigten Ausführungsform in einen Innenraum 23 des als Hohlkörper konfigurierten Filterelements 1 hinein orientiert. Wie sich insbesondere Fig. 3 entnehmen lässt, ist die Wölbung 22 hauptsächlich in einem mittleren Bereich 24 des ersten Wandkörpers 5 ausgebildet, wobei sich dieser mittlere Bereich 24 zu den beiden Endkörpern 11, 12 distal befindet. In sich an den mittleren Bereich 24 in der Längsrichtung 17 beiderseits anschließenden Endbereichen 25, 26 erfolgt dann der Übergang der Wölbung 22 auf die Geometrie der Endkörper 11, 12. Mit anderen Worten, die Wölbung 22 ist im mittleren Bereich 24 stärker ausgeprägt als in den Endbereichen 25, 26, über welche die Anbindung an die Endkörper 11, 12 erfolgt.

In Fig. 5 ist die Blickrichtung des Betrachters parallel zur Längsrichtung 17 orientiert. Erkennbar ragt die Wölbung 22 im mittleren Bereich 24 in eine parallel zur Längsrichtung 17 orientierte Projektion einer Gasdurchlassöffnung 27 seitlich hinein, die im ersten Endkörper 11 ausgebildet ist.

Die Faltung des Filtermaterials der beiden Plattenfilterkörper 2, 3 erfolgt zweckmäßig in der Querrichtung 21. Somit erstrecken sich die Falten parallel zur Querrichtung 21. Endfalten des gefalteten Filtermaterials befinden sich somit an den Längsenden des jeweiligen Plattenfilterkörpers 2, 3 und sind dort fest sowie dicht mit dem jeweiligen Endkörper 11, 12 verbunden. Dementsprechend sind die ersten Längsenden 13, 14 und die zweiten Längsenden 15, 16 der beiden Plattenfilterkörper 2, 3 durch die Endfalten des Filtermaterials des jeweiligen Plattenfilterkörpers 2, 3 gebildet.

Die beiden Wandkörper 5, 6 können an ihren Längsenden jeweils zwei Rasthaken 28 aufweisen. Die Rasthaken 28 übergreifen dabei den jeweiligen Endkörper 11, 12 randseitig. Auf diese Weise ist jeder Endkörper 11, 12 mit insgesamt vier Rasthaken 28 an den beiden Wandkörpern 5, 6 gesichert.

Während der erste Wandkörper 11 die Gasdurchlassöffnung 27 aufweist, die entweder eine Einlassöffnung oder eine Auslassöffnung repräsentiert, ist der zweite Endkörper 12 vorzugsweise geschlossen konfiguriert. Wie sich insbesondere Fig. 3 entnehmen lässt, kann der zweite Endkörper 12 an seiner vom ersten Endkörper 11 abgewandten Außenseite 29 eine erste Befestigungskonsole 30 aufweisen. Mit Hilfe dieser ersten Befestigungskonsole 30 kann das Filterelement 1 in einem Filtergehäuse einer Filtereinrichtung fixiert werden. Der zweite Endkörper 12 kann gemäß Fig. 3 an seiner dem ersten Endkörper 11 zugewandten Innenseite 31 eine zweite Befestigungskonsole 32 aufweisen, an der beispielsweise ein Sensor oder dergleichen befestigt werden kann. (???)

Wie sich den Figuren 2 und 3 entnehmen lässt, ist der zweite Wandkörper 6 vorzugsweise im Wesentlichen eben konfiguriert.

Die beiden Endkörper 11, 12 sind zweckmäßig parallel zueinander angeordnet und vorzugsweise quer zur Längsmittelachse 4 orientiert. Insgesamt ergibt sich gemäß Fig. 4 quer zur senkrecht auf der Zeichnungsebene stehenden Querrichtung 21 somit eine rechteckige Außenkontur für das Filterelement 1.

Die Wandkörper 5, 6 können zwischen den mit den Plattenfilterkörpern 2, 3 verbundenen Randbereichen 33, 34 des ersten Wandkörpers 5 und Randbereichen 35, 36 des zweiten Wandkörpers 6 verrippt sein. Die jeweilige Verrippung 37 des ersten Wandkörpers 5 bzw. 38 des zweiten Wandkörpers 6 kann dabei eine Vielzahl von Längsrippen 39 sowie eine Vielzahl von Querrippen 40 umfassen, die sich kreuzen. Im Beispiel der Figuren 1 bis 5 sind nur die vom Innenraum 23 abgewandten Außenseiten der beiden Wandkörper 5, 6 verrippt.

Bei der in Fig. 6 gezeigten Ausführungsform sind beide Wandkörper 5, 6 jeweils mit einer Wölbung 22 ausgestattet, wobei die beiden Wölbungen 22 gleichförmig, hier jeweils nach innen, orientiert sind.

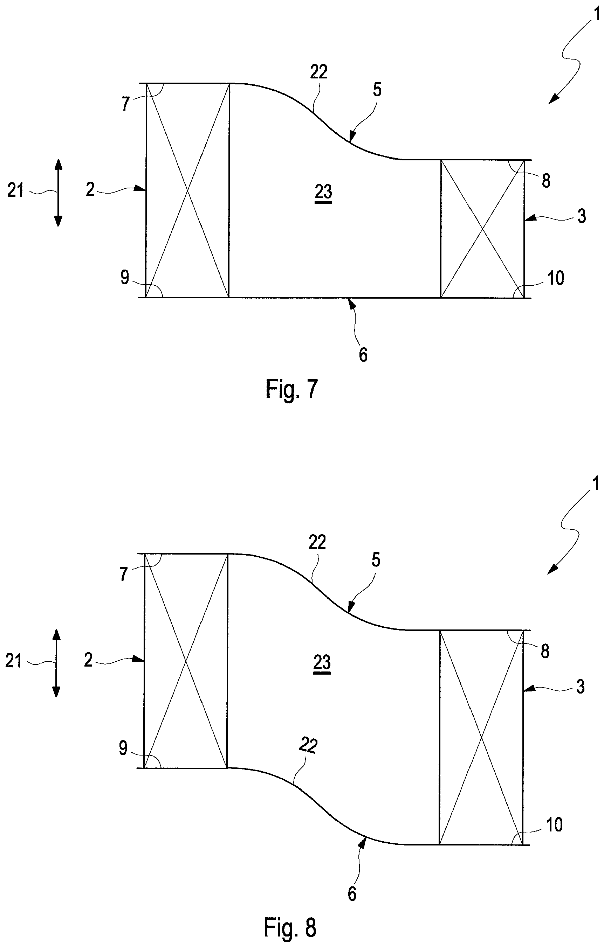

Bei der in Fig. 7 gezeigten Ausführungsform ist nur der erste Wandkörper 5 mit einer derartigen Wölbung 22 ausgestattet, die zweckmäßig nach innen orientiert ist.

Fig. 8 zeigt nun eine Ausführungsform, bei der wieder beide Wandkörper 5, 6 jeweils mit einer derartigen Wölbung 22 ausgestattet sind, wobei in diesem Fall die beiden Wölbungen unterschiedlich bzw. entgegengesetzt orientiert sind. Während die Wölbung 22 des ersten Wandkörpers 5 nach innen orientiert ist, ist die Wölbung 22 des zweiten Wandkörpers 6 nach außen orientiert.

In Fig. 4 sind die beiden Plattenfilterkörper 2, 3 durch den ersten Wandkörper 5 verdeckt und demensprechend mit unterbrochener Bezugslinie angedeutet. In den Fig. 4 und 5 sind rein exemplarisch für den zweiten Plattenfilterkörper 3 zwei Einbauvarianten angedeutet. Für die Haupteinbauvariante ist der zweite Plattenfilterkörper mit 3 bezeichnet. Für die Alternativeinbauvariante ist der zweite Plattenfilterkörper mit 3' bezeichnet und mit unterbrochener Linie eingezeichnet. Erkennbar erstrecken sich die beiden Plattenfilterkörper 2, 3 in der Haupteinbauvariante hinsichtlich ihrer Plattenebenen parallel zueinander und parallel zur Längsrichtung 17 sowie parallel zur Querrichtung 21.

Bei der Alternativeinbauvariante erstrecken sich die beiden Plattenfilterkörper 2, 3 hinsichtlich ihrer Plattenebenen geneigt zueinander. In Fig. 4 ist dabei für den zweiten Plattenfilterkörper 3' angedeutet, dass er sich hinsichtlich seiner Plattenebene geneigt zur Längsrichtung 17 des Filterelements 1 erstreckt. In Fig. 5 ist dagegen angedeutet, dass sich der zweite Plattenfilterkörper 3' hinsichtlich seiner Plattenebene geneigt zur Querrichtung 21 des Filterelements 1 erstreckt. Es ist klar, dass der zweite Plattenfilterkörper 3' sich auch geneigt zur Längsrichtung 17 und geneigt zur Querrichtung 21 erstrecken kann. Im Beispiel sind die gegenüber der Längsrichtung 17 und/oder der Querrichtung 21 geneigten zweiten Plattenfilterkörper 3' mit ersten Plattenfilterkörpern 2 kombiniert, die sich parallel zur Längsrichtung 17 und parallel zur Querrichtung 21 erstrecken. Ebenso sind Kombinationen denkbar, bei denen beide Plattenfilterkörper 2, 3 gegenüber der Längsrichtung 17 und/oder der Querrichtung 21 geneigt sind, wobei sie dann außerdem zueinander geneigt sein können oder sich parallel zueinander erstrecken können.

## Patentansprüche

1. Filterelement, insbesondere Luftfilterelement für eine Frischluftanlage einer Brennkraftmaschine,
- mit einem ersten Plattenfilterkörper (2) aus plissiertem Filtermaterial,
- mit einem dem ersten Plattenfilterkörper (2) gegenüberliegenden separaten zweiten Plattenfilterkörper (3) aus plissiertem Filtermaterial,
- mit einem ersten Wandkörper (5) aus Kunststoff, der mit einem ersten Querende (7) des ersten Plattenfilterkörpers (2) und mit einem ersten Querende (8) des zweiten Plattenfilterkörpers (3) fest und dicht verbunden ist,
- mit einem dem ersten Wandkörper (5) gegenüberliegenden zweiten Wandkörper (6) aus Kunststoff, der mit einem zweiten Querende (9) des ersten Plattenfilterkörpers (2) und mit einem zweiten Querende (10) des zweiten Plattenfilterkörpers (3) fest und dicht verbunden ist,
- mit einem ersten Endkörper (11) aus Kunststoff, der mit einem ersten Längsende (13) des ersten Plattenfilterkörpers (2) und mit einem ersten Längsende (14) des zweiten Plattenfilterkörpers (3) fest und dicht verbunden ist,
- mit einem dem ersten Endkörper (11) gegenüberliegenden zweiten Endkörper (12) aus Kunststoff, der mit einem zweiten Längsende (15) des ersten Plattenfilterkörpers (2) und mit einem zweiten Längsende (16) des zweiten Plattenfilterkörpers (3) fest und dicht verbunden ist,
- wobei zumindest einer der Endkörper (11, 12) eine Gasdurchlassöffnung (27) aufweist,
- wobei die beiden Plattenfilterkörper (2, 3) in ihrer Querrichtung (21) unterschiedlich groß sind,
- wobei zumindest einer der Wandkörper (5, 6) zwischen den beiden Plattenfilterkörpern (2, 3) im Profil quer zur Längsrichtung (17) der Plattenfilterkörper (2, 3) eine Wölbung (22) aufweist, **dadurch gekennzeichnet,**
- **dass** die Wölbung in einen Innenraum (23) des Filterelements (1) hinein orientiert ist, und
- **dass** das Filtermaterial der beiden Plattenfilterkörper (2, 3) in der Querrichtung (21) des jeweiligen Plattenfilterkörpers (2, 3) gefaltet ist, so dass sich Endfalten des jeweiligen Plattenfilterkörpers (2, 3) an den Längsenden (13, 14, 15, 16) des jeweiligen Plattenfilterkörpers (2, 3) befinden und fest sowie dicht mit dem jeweiligen Endkörper (11, 12) verbunden sind.

2. Filterelement nach Anspruch 1,
**dadurch gekennzeichnet,**
**dass** das erste Querende (7) des ersten Plattenfilterkörpers (2) in einer ersten Ebene (18) liegt, die von einer zweiten Ebene (19) beabstandet ist, in der das erste Querende (8) des zweiten Plattenfilterkörpers (3) liegt.

3. Filterelement nach einem der vorhergehenden Ansprüche,
**dadurch gekennzeichnet,**
**dass** die beiden Plattenfilterkörper (2, 3) in ihrer Längsrichtung (17) gleich groß sind.

4. Filterelement nach einem der vorhergehenden Ansprüche,
**dadurch gekennzeichnet,**
**dass** die Wölbung (22) in einem mittleren Bereich (24) des jeweiligen Wandkörpers (5, 6), der zu beiden Endkörpern (11, 12) distal angeordnet ist, stärker ausgeprägt ist als in Endbereichen (25, 26) des jeweiligen Wandkörpers (5, 6), die beiderseits des mittleren Bereichs (24) proximal zu je einem Endkörper (11, 12) angeordnet sind.

5. Filterelement nach einem der vorhergehenden Ansprüche,
**dadurch gekennzeichnet,**
**dass** zumindest einer der Wandkörper (5, 6) an wenigstens einem Längsende mit dem jeweiligen Endkörper (11, 12) verrastet ist.

6. Filterelement nach einem der vorhergehenden Ansprüche,
**dadurch gekennzeichnet,**
**dass** die beiden Wandkörper (5, 6) an ihren Längsenden jeweils zwei Rasthaken (28) aufweisen, die den jeweiligen Endkörper (11, 12) randseitig übergreifen.

7. Filterelement nach einem der vorhergehenden Ansprüche,
**dadurch gekennzeichnet,**
**dass** der jeweilige Endkörper (11, 12) mit den zugewandten Längsenden (13, 14, 15, 16) der beiden Plattenfilterkörper und der beiden Wandkörper (5, 6) fest und dicht verbunden ist.

8. Filterelement nach einem der vorhergehenden Ansprüche,
**dadurch gekennzeichnet,**
**dass** der erste Endkörper (11) die Gasdurchlassöffnung (27) aufweist, während der zweite Endkörper (12) geschlossen ist.

9. Filterelement nach Anspruch 8,
**dadurch gekennzeichnet,**
**dass** der zweite Endkörper (12) einer Seite eine erste Befestigungskonsole (30) aufweist, mit deren Hilfe das Filterelement (1) in einem Filtergehäuse fixierbar ist.

10. Filterelement nach Anspruch 9,
**dadurch gekennzeichnet,**
- **dass** der zweite Endkörper (12) an einer der ersten Befestigungskonsole (30) gegenüberliegenden Seite eine zweite Befestigungskonsole (32) aufweist, die von der ersten Befestigungskonsole (30) verschieden ist,
- **dass** der zweite Endkörper (12) wahlweise mit der ersten Befestigungskonsole (30) oder mit der zweiten Befestigungskonsole (32) am Filterelement (1) anbringbar ist.

11. Filterelement nach einem der vorhergehenden Ansprüche,
**dadurch gekennzeichnet,**
**dass** sich die beiden Plattenfilterkörper (2, 3) hinsichtlich ihrer Plattenebenen parallel zueinander erstrecken.

12. Filterelement nach einem der vorhergehenden Ansprüche,
**dadurch gekennzeichnet,**
**dass** sich die beiden Plattenfilterkörper (2, 3) hinsichtlich ihrer Plattenebenen geneigt zueinander erstrecken, wobei insbesondere vorgesehen sein kann, dass zumindest einer der Plattenfilterkörper (2, 3) hinsichtlich seiner Plattenebene geneigt zu einer Längsrichtung (17) des Filterelements (1) und/oder geneigt zu einer Querrichtung (21) des Filterelements (1) angeordnet ist.

13. Filterelement nach einem der vorhergehenden Ansprüche,
**dadurch gekennzeichnet,**
**dass** sich zumindest einer der Plattenfilterkörper (2, 3) hinsichtlich seiner Plattenebene parallel zur Längsrichtung (17) des Filterelements (1) und/oder parallel zur Querrichtung (21) des Filterelements (1) erstreckt.

## Claims

1. A filter element, in particular an air filter element for a fresh air system of an internal combustion engine,
- with a first plate filter body (2) made of pleated filter material,
- with a separate second plate filter body (3) made of pleated filter material lying opposite the first plate filter body (2),
- with a first wall body (5) made of plastic, which is rigidly and tightly connected to a first transverse end (7) of the first plate filter body (2) and to a first transverse end (8) of the second plate filter body (3),
- with a second wall body (6) made of plastic, lying opposite the first wall body (5), which second wall body is rigidly and tightly connected to a second transverse end (9) of the first plate filter body (2) and to a second transverse end (10) of the second plate filter body (3),
- with a first end body (11) made of plastic, which is rigidly and tightly connected to a first longitudinal end (13) of the first plate filter body (2) and to a first longitudinal end (14) of the second plate filter body (3),
- with a second end body (12) made of plastic, lying opposite the first end body (11), which second end body is rigidly and tightly connected to a second longitudinal end (15) of the first plate filter body (2) and to a second longitudinal end (16) of the second plate filter body (3),
- wherein at least one of the end bodies (11, 12) has a gas passage opening (27),
- wherein the two plate filter bodies (2, 3) are of different size in their transverse direction (21),
- wherein at least one of the wall bodies (5, 6) between the two plate filter bodies (2, 3) in profile transversely to the longitudinal direction (17) of the plate filter bodies (2, 3) has a curvature (22),
**characterized in that**
- the curvature (22) is oriented into an interior space (23) of the filter element (1),
- the filter material of the two plate filter bodies (2, 3) is folded in the transverse direction (21) of the respective plate filter body (2, 3), so that end folds of the respective plate filter body (2, 3) are situated at the longitudinal ends (13, 14, 15, 16) of the respective plate filter body (2, 3) and are rigidly and tightly connected to the respective end body (11, 12).

2. The filter element according to Claim 1,
**characterized in that**
the first transverse end (7) of the first plate filter body (2) lies in a first plane (18), which is spaced apart from a second plane (19), in which the first transverse end (8) of the second plate filter body (3) lies.

3. The filter element according to one of the preceding claims,
**characterized in that**
the two plate filter bodies (2, 3) are of equal size in their longitudinal direction (17).

4. The filter element according to one of the preceding claims,
**characterized in that**
the curvature (22) is more intensively pronounced in a central region (24) of the respective wall body (5, 6), which is arranged distally to both end bodies (11, 12), than in end regions (25, 26) of the respective wall body (5, 6), which are arranged on both sides of the central region (24) proximally in each case to an end body (11, 12).

5. The filter element according to one of the preceding claims,
**characterized in that**
at least one of the wall bodies (5, 6) is locked in place at at least one longitudinal end with the respective end body (11, 12).

6. The filter element according to one of the preceding claims,
**characterized in that**
the two wall bodies (5, 6) have at their longitudinal ends respectively two engagement hooks (28), which engage over the respective end body (11, 12) on the edge side.

7. The filter element according to one of the preceding claims,
**characterized in that**
the respective end body (11, 12) is rigidly and tightly connected to the facing longitudinal ends (13, 14, 15, 16) of the two plate filter bodies and of the two wall bodies (5, 6).

8. The filter element according to one of the preceding claims,
**characterized in that**
the first end body (11) has the gas passage opening (27), whilst the second end body (12) is closed.

9. The filter element according to Claim 8,
**characterized in that**
the second end body (12) of one side has a first fastening bracket (30), by means of which the filter element (1) is able to be fixed in a filter housing.

10. The filter element according to Claim 9,
**characterized in that**
- the second end body (12) has on a side lying opposite the first fastening bracket (30) a second fastening bracket (32), which is different from the first fastening bracket (30),
- the second end body (12) is optionally able to be mounted on the filter element (1) with the first fastening bracket (30) or with the second fastening bracket (32).

11. The filter element according to one of the preceding claims,
**characterized in that**
the two plate filter bodies (2, 3) extend parallel to one another with respect to their plate planes.

12. The filter element according to one of the preceding claims,
**characterized in that**
the two plate filter bodies (2, 3) extend inclined to one another with respect to their plate planes, wherein in particular provision can be made that at least one of the plate filter bodies (2, 3) with regard to its plate plane is arranged inclined to a longitudinal direction (17) of the filter element (1) and/or inclined to a transverse direction (21) of the filter element (1).

13. The filter element according to one of the preceding claims,
**characterized in that**
at least one of the plate filter bodies (2, 3) extends with regard to its plate plane parallel to the longitudinal direction (17) of the filter element (1) and/or parallel to the transverse direction (21) of the filter element (1).

## Revendications

1. Élément filtrant, en particulier élément filtrant à air pour une installation d'air frais d'un moteur à combustion interne,
- avec un premier corps de filtre à plaque (2) en matériau filtrant plissé,
- avec un deuxième corps de filtre à plaque (3) en matériau filtrant plissé séparé opposé au premier corps de filtre à plaque (2),
- avec un premier corps de paroi (5) en plastique, qui est relié de manière étanche et solide à une première extrémité transversale (7) du premier corps de filtre à plaque (2) et à une première extrémité transversale (8) du deuxième corps de filtre à plaque (3),
- avec un deuxième corps de paroi (6) en plastique opposé au premier corps de paroi (5), qui est relié de manière étanche et solide à une deuxième extrémité transversale (9) du premier corps de filtre à plaque (2) et à une deuxième extrémité transversale (10) du deuxième corps de filtre à plaque (3),
- avec un premier corps d'extrémité (11) en plastique, qui est relié de manière étanche et solide à une première extrémité longitudinale (13) du premier corps de filtre à plaque (2) et à une première extrémité longitudinale (14) du deuxième corps de filtre à plaque (3),
- avec un deuxième corps d'extrémité (12) en plastique opposé au premier corps d'extrémité (11), qui est relié de manière étanche et solide à une deuxième extrémité longitudinale (15) du premier corps de filtre à plaque (2) et à une deuxième extrémité longitudinale (16) du deuxième corps de filtre à plaque (3),
- dans lequel au moins un des corps d'extrémité (11, 12) présente un orifice de passage de gaz (27),
- dans lequel les deux corps de filtre à plaque (2, 3) sont de taille différente dans leur direction transversale (21),
- dans lequel au moins un des corps de paroi (5, 6) présente une courbure (22) entre les deux corps de filtre à plaque (2, 3) en profil transversal par rapport à la direction longitudinale (17) des corps de filtre à plaque (2, 3),
**caractérisé en ce**
- **que** la courbure est orientée dans un espace intérieur (23) de l'élément filtrant (1), et
- **que** le matériau filtrant des deux corps de filtre à plaque (2, 3) est plié dans la direction transversale (21) du corps de filtre à plaque (2, 3) respectif, de sorte que les plis d'extrémité du corps de filtre à plaque (2, 3) respectif se trouvent au niveau des extrémités longitudinales (13, 14, 15, 16) du corps de filtre à plaque (2, 3) respectif et soient reliés de manière solide et étanche au corps d'extrémité (11, 12) respectif.

2. Élément filtrant selon la revendication 1,
**caractérisé en ce**
**que** la première extrémité transversale (7) du premier corps de filtre à plaque (2) se trouve dans un premier plan (18), qui est distant d'un deuxième plan (19), dans lequel se trouve la première extrémité transversale (8) du deuxième corps de filtre à plaque (3).

3. Élément filtrant selon l'une quelconque des revendications précédentes,
**caractérisé en ce**
**que** les deux corps de filtre à plaque (2, 3) ont la même taille dans leur direction longitudinale (17).

4. Élément filtrant selon l'une quelconque des revendications précédentes,
**caractérisé en ce**
**que** la courbure (22) est davantage marquée dans une zone médiane (24) du corps de paroi (5, 6) respectif, qui est agencé de manière distale par rapport aux deux corps d'extrémité (11, 12), que dans des zones d'extrémité (25, 26) du corps de paroi (5, 6) respectif, qui est agencé des deux côtés de la zone médiane (24) de manière proximale par rapport à respectivement un corps d'extrémité (11, 12).

5. Élément filtrant selon l'une quelconque des revendications précédentes,
**caractérisé en ce**
**qu'**au moins un des corps de paroi (5, 6) s'enclenche au niveau d'au moins une extrémité longitudinale avec le corps d'extrémité (11, 12) respectif.

6. Élément filtrant selon l'une quelconque des revendications précédentes,
**caractérisé en ce**
**que** les deux corps de paroi (5, 6) présentent au niveau de leurs extrémités longitudinales respectivement deux crochets d'encliquetage (28), qui recouvrent le corps d'extrémité (11, 12) respectif sur le bord.

7. Élément filtrant selon l'une quelconque des revendications précédentes,
**caractérisé en ce**
**que** le corps d'extrémité (11, 12) respectif est relié de manière étanche et solide aux extrémités longitudinales (13, 14, 15, 16) tournées l'une vers l'autre des deux corps de filtre à plaque et des deux corps de paroi (5, 6).

8. Élément filtrant selon l'une quelconque des revendications précédentes,
**caractérisé en ce**
**que** le premier corps d'extrémité (11) présente l'orifice de passage de gaz (27), pendant que le deuxième corps d'extrémité (12) est fermé.

9. Élément filtrant selon la revendication 8,
**caractérisé en ce**
**que** le deuxième corps d'extrémité (12) d'un côté présente une première console de fixation (30), à l'aide de laquelle l'élément filtrant (1) peut être fixé dans un boîtier de filtre.

10. Élément filtrant selon la revendication 9,
**caractérisé en ce**
- **que** le deuxième corps d'extrémité (12) présente au niveau d'un côté opposé à la première console de fixation (30), une deuxième console de fixation (32), qui est différente de la première console de fixation (30),
- **que** le deuxième corps d'extrémité (12) peut être appliqué sur l'élément filtrant (1) au choix avec la première console de fixation (30) ou avec la deuxième console de fixation (32).

11. Élément filtrant selon l'une quelconque des revendications précédentes,
**caractérisé en ce**
**que** les deux corps de filtre à plaque (2, 3) s'étendent parallèlement l'un par rapport à l'autre par rapport à leurs plans de plaque.

12. Élément filtrant selon l'une quelconque des revendications précédentes,
**caractérisé en ce**
**que** les deux corps de filtre à plaque (2, 3) s'étendent de manière inclinée l'un par rapport à l'autre par rapport à leurs plans de plaque, dans lequel il peut être prévu en particulier, qu'au moins un des corps de filtre à plaque (2, 3) est agencé par rapport à son plan de plaque de manière inclinée par rapport à une direction longitudinale (17) de l'élément filtrant (1) et/ou de manière inclinée par rapport à une direction transversale (21) de l'élément filtrant (1).

13. Élément filtrant selon l'une quelconque des revendications précédentes,
**caractérisé en ce**
**qu'**au moins un des corps de filtre à plaque (2, 3) s'étend par rapport à son plan de plaque parallèlement par rapport à la direction longitudinale (17) de l'élément filtrant (1) et/ou parallèlement par rapport à la direction transversale (21) de l'élément filtrant (1).
